# EUROPÄISCHE PATENTSCHRIFT

(11) **EP 0 860 383 B1**
(45) Veröffentlichungstag und Bekanntmachung des Hinweises auf die Patenterteilung: **28.02.2001**
(21) Anmeldenummer: 97120523.2
(22) Anmeldetag: 22.11.1997
(51) Int. Cl.: B65G 15/00, B65G 15/10, B65G 37/02, B65G 17/00

(54) **Segment einer Fördereinrichtung für Werkstückträger einer Fertigungseinrichtung**
Conveyor segment for workpiece-carriers of a fabricating device
Segment d'un convoyeur pour porte-pièces d'un dispositif de fabrication

(30) Priorität: 19.02.1997 DE 19706365
(43) Veröffentlichungstag der Anmeldung: 26.08.1998
(73) Patentinhaber: Preh-Werke GmbH & Co. KG, 97616 Bad Neustadt a.d. Saale (DE)
(72) Erfinder: Bardroff, Hans, 97618 Hohenroth (DE); Brunhuber, Uwe, 979616 Bad Neustadt (DE)
(74) Vertreter: Dietrich, Barbara

(56) Entgegenhaltungen:
- DE-A- 4 431 836
- DE-U- 9 104 557
- GB-A- 287 294
- GB-A- 2 069 439
- US-A- 4 715 286

## Beschreibung

Die Erfindung betrifft ein Segment einer Fördereinrichtung für Werkstückträger einer Fertigungseinrichtung nach dem Oberbegriff des Patentanspruchs 1.

Derartige Segmente werden für die Zusammenstellung von Fertigungseinrichtungen benötigt, beispielsweise einer Bearbeitungsstraße für ein Werkstück, das auf einem Werkstückträger zu den einzelnen Bearbeitungsstationen gefördert werden soll.

Aus der DE 44 31 836 A1 ist bereits eine Vorrichtung zum Umsetzen von Teilen von einer ersten auf eine in einem Winkel oder parallel zu dieser angeordneten zweite Förderbahn bekannt, wobei diese Vorrichtung keine Maßnahme zum Umsetzen in beide Richtungen, von der zweiten auf die erste Förderbahn, aufzeigt.

Aus der DE 44 39 107 A1 ist eine Vorrichtung entnehmbar, in der alternativ zu einer gradlinigen Förderspur eine einschaltbare Auslenkspur vorgesehen ist, mit der die Förderebene verlassen werden kann. Bei dieser Vorrichtung sind keine Maßnahmen vorgesehen, z. B. eine Warteschleife abzufahren, wenn eine Bearbeitungsstation überfüllt ist.

Hiervon ausgehend liegt der Erfindung die Aufgabe zugrunde, ein gattungsgemäßes Segment einer Fördereinrichtung derart zu gestalten, daß eine wahlfreie Ein- oder Ausfädelung eines Werkstückträgers einer aus mehreren Segmenten gebildeten Fördereinrichtung erfolgen kann, ohne daß eine Überfrachtung mit Antriebselementen usw. erfolgt, wobei das Segment in einfacher Weise herstellbar sein soll.

Diese Aufgabe ist durch die im Kennzeichen des Anspruchs 1 genannten Merkmale gelöst worden. Vorteilhafte Weiterbildungen sind mit den Unteransprüchen angegeben.

Ein Ausführungsbeispiel der Erfindung ist in der Zeichnung dargestellt und wird nachfolgend beschrieben.

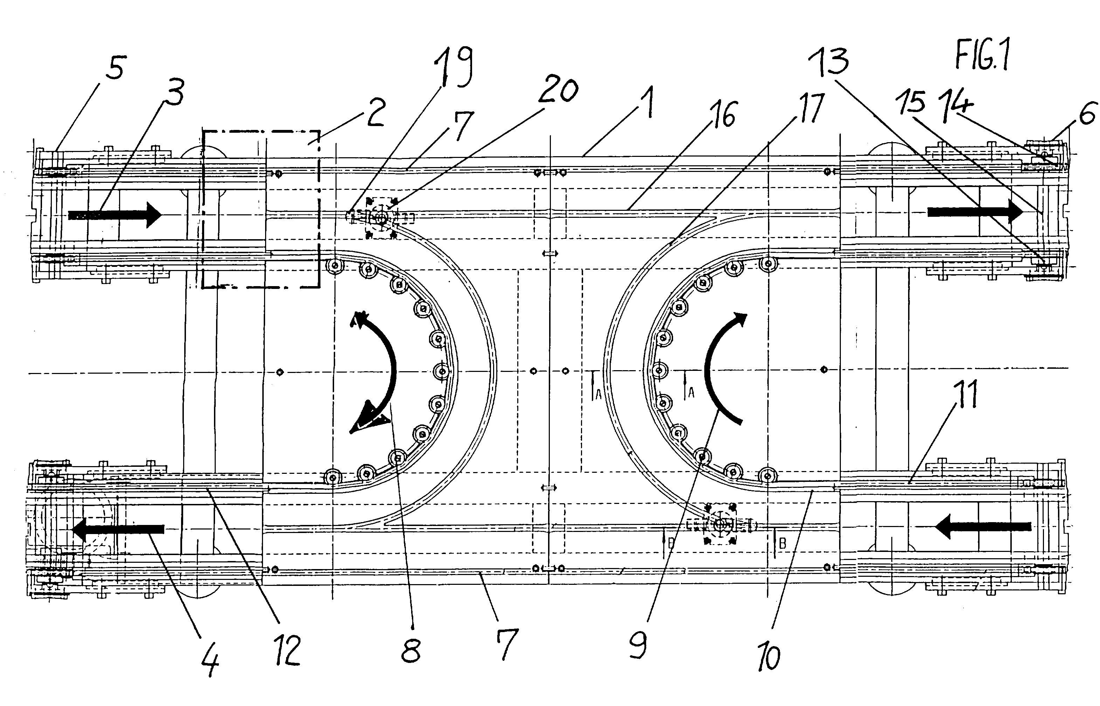

Die Zeichnung zeigt:
Fig. 1
   eine Draufsicht eines erfindungsgemäßen Segments,
Fig. 2
   eine Seitenansicht,
Fig. 3 und 4
   Einzelheiten der Fig. 1 in Schnittdarstellungen.

Die Fig. 1 zeigt eine Draufsicht auf ein Segment 1 einer Fördereinrichtung für Werkstückträger 2 einer Fertigungseinrichtung, die mit wenigstens zwei geradlinig, parallel zueinander entgegengesetzt fördernden Förderspuren 3,4, mit an den Segmentenden 5,6 umgelenkten Förderriemen 7, die mit entsprechenden Förderspuren weiterer nicht dargestellter Segmente zusammenwirken, und mit wenigstens zwei zwischen den Förderspuren 3,4 bestehenden Umlenkspuren 8,9, mit an den Segmentenden 5,6 umgelenkten Förderriemen 10, mittels derer die Werkstückträger 2 von der Förderspur 3,4 in die andere und umgekehrt gefördert werden können.

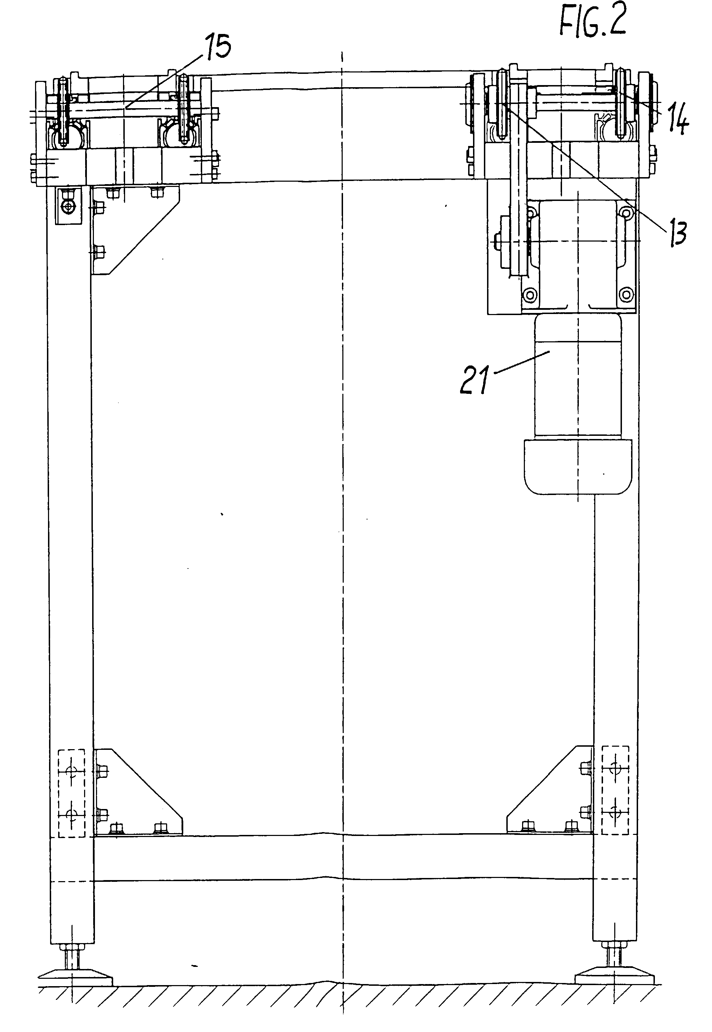

Erfindungsgemäß ist bei diesem Segment 1 vorgesehen, daß die Umlenkspuren 8,9 mit den entsprechenden Förderspuren 3,4 parallel überlappende Endabschnitte 11,12 aufweisen, deren Förderriemen 7,10 von Riemenscheiben 13,14 angetrieben bzw. umgelenkt werden, die auf einer gemeinsamen Welle 15 befestigt sind, wie in Fig. 2 dargestellt ist, die eine Seitenansicht des Segments aus Fig. 1 zeigt. Jede Förder- bzw. Umlenkspur 3,4 bzw. 8,9 weist eine Führungsnut 16 bzw. 17 auf, in der die Werkstückträger 2 mittels Führungszapfen 18 geführt sind.

Zwischen der Führungsnut 16, der Förderspur 3,4 und der Führungsnut 17 der Umlenkspur 8,9 besteht eine Weiche 19, deren Stellung den Transport der Werkstückträger 2 in die Umlenkspur 8,9 steuert. Mit diesem Segment 1 ist es nun möglich, ohne Unterbrechung des Förderablaufs bzw. ohne Bandstillstand einzelne oder mehrere Werkstückträger 2 aus den geradlinig geführten Förderspuren 3,4 herauszufahren und in eine der anderen Förderspuren 3,4, die in entgegengesetzte Richtungen fördern, einzuschleusen.

Vorteilhafterweise kann hierfür vorgesehen werden, daß im Zuge der geradlinigen Förderspuren 3,4 Barcodeleser angeordnet sind zur Erkennung der codierten Werkstückträger 2, wobei dann die Weiche 19 von einem Steller 20 betätigt wird, der auf ein Barcodelesersignal reagiert. Die Anordnung der Förderriemen 7, 10 auf den Riemenscheiben 13,14, die paarweise auf der gemeinsamen Welle 15 angeordnet sind, ermöglicht es, daß eine der vier die Riemenscheiben 13,14 tragenden Wellen 15 von einem Antriebselement 21 angetrieben und die verbleibenden Wellen 15 über die Förderriemen 7,10 der Förder- und der Umlenkspuren 3,4 und 8,9 angetrieben werden. Hierdurch ist eine außerordentliche Verbilligung durch Entfall von Antriebselementen 21 und Übertragungselementen erreicht worden.

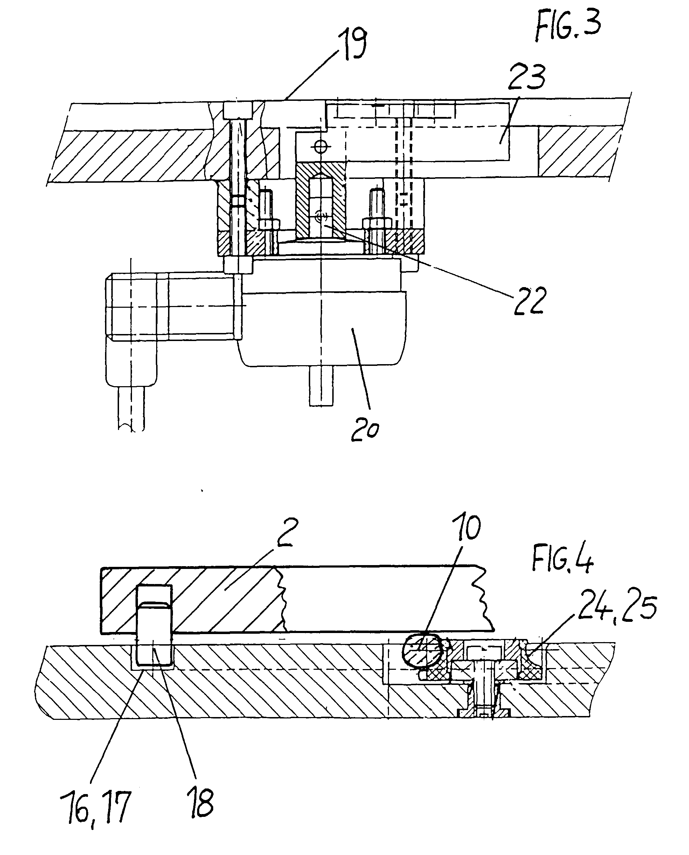

Wie in Fig. 3 dargestellt, besteht die Weiche 19 aus dem Steller 20, dessen Welle 22 einen Schwenkhebel 23 aufweist, der in die Wandung der Führungsnut 16 eingesetzt ist, und, je nach Stellung, die Werkstückträger 2 in der geradlinigen Förderspur 3,4 passieren läßt oder in die Umlenkspur 8,9 eintreten läßt.

Der Förderriemen 10 der Umlenkspur 8,9 ist vorteilhafterweise als Rundschnur ausgeführt, wobei, wie in Fig. 4 dargestellt ist, diese auf Rollen 24 aufgesetzt ist, die eine entsprechende Rundkehlausnehmung 25 am äußeren Umfang aufweisen.

Mit dem erfindungsgemäßen Segment ist es möglich geworden, daß die Werkstückträger 2 von einer Förderspur 3, 4 in die andere und umgekehrt gefördert werden können, ohne Unterbrechung des Förderablaufs bzw. ohne Bandstillstand.

Dadurch, daß der Antrieb nur noch durch ein Antriebselement 21 erfolgen kann, ist eine außerordentliche Verbilligung erreicht worden.

## Patentansprüche

1. Segment (1) einer Fördereinrichtung für Werkstückträger (2) einer Fertigungseinrichtung, mit wenigstens zwei geradlinig, parallel zueinander entgegengesetzt fördernder Förderspuren(3, 4) und einer zwischen den Förderspuren (3, 4) befindlichen Umlenkspur (8) und einem umgelenkten Förderriemen (7) , wodurch die Werkstückträger (2) von einer Förderspur (3) auf die andere Förderspur (4) gefördert werden können, dadurch gekennzeichnet, daß
- die Förderspuren (3, 4) über umgelenkte Förderriemen (7, 10) mit entsprechenden Förderspuren (3, 4) weiterer Segmente zusammenwirken, wobei wenigstens zwei Umlenkspuren (8, 9) an Segmentenden (5, 6) zwischen den Förderspuren (3, 4) bestehen,
- die Umlenkspuren (8, 9) mit den entsprechenden Förderspuren (3, 4) parallel überlappende Endabschnitte (11, 12) aufweisen, deren Förderriemen (7, 10) von Riemenscheiben (13, 14) angetrieben bzw. umgelenkt werden, die auf einer gemeinsamen Welle (15) befestigt sind,
- jede Förder- bzw. Umlenkspur (3, 4 bzw. 8,9) eine Führungsnut (16 bzw. 17) aufweist, in der die Werkstückträger (2) mittels Führungszapfen (18) geführt sind, und
- zwischen der Führungsnut (16) der Förderspur (3, 4) und der Führungsnut der Umlenkspur (8, 9) eine Weiche (19) angeordnet ist, deren Stellung den Transport der Werkstückträger (2) in die Umlenkspur (8, 9) steuert,
- wobei die Werkstückträger (2) aus den Förderspuren (3, 4) heraus und in eine der anderen Förderspuren (3, 4) eingeschleust werden können.

2. Segment nach Anspruch 1, dadurch gekennzeichnet, daß im Zuge der geradlinigen Förderspuren (3, 4) Barcodeleser zur Erkennung von mit Barcode versehenen Werkstückträgern (2) angeordnet sind.

3. Segment nach Anspruch 2, dadurch gekennzeichnet, daß die Weiche (19) von einem Steller (20) betätigt wird, der auf ein Barcodelesesignal reagiert.

4. Segment nach einem der vorstehenden Ansprüche, dadurch gekennzeichnet, daß je Förderspur (3, 4) zwei die Riemenscheiben (13, 14) tragende Wellen (15) vorhanden sind.

5. Segment nach Anspruch 4, dadurch gekennzeichnet, daß eine der vier Wellen (15) von einem Antriebselement (21) und die verbleibenden Wellen (15) über die Förderriemen (7, 10) der Förderspuren (3, 4) und der Umlenkspuren (8, 9) angetrieben werden.

6. Segment nach einem der vorstehenden Ansprüche, dadurch gekennzeichnet, daß der Förderriemen (10) der Umlenkspuren (8, 9) als Rundschnur ausgeführt und im Bereich der Umlenkspur (8, 9) auf Rollen (24) aufgesetzt ist, die eine entsprechende Rundkehlausnehmung (25) am äußeren Umfang aufweisen.

## Claims

1. Segment (1) of a conveyor device for work-piece carriers (2) of a manufacturing device, having at least two conveyor tracks (3, 4), conveying linearly, in parallel in opposition to each other, and a deflection track (8) located between the conveyor tracks (3, 4), and a deflected conveyor belt (7), whereby the work-piece carriers (2) of one conveyor track (3) can be conveyed onto the other conveyor track (4), characterised in that
- the conveyor tracks (3, 4) cooperate, by way of deflected conveyor belts (7, 10), with corresponding conveyor tracks (3, 4) of further segments, with there being at least two deflection tracks (8, 9) at segment ends (5, 6) between the conveyor tracks (3, 4),
- the deflection tracks (8, 9) have end sections (11, 12) that overlap with the corresponding conveyor tracks (3, 4) in parallel and the conveyor belts (7, 10) of which are driven or deflected by belt pulleys (13, 14) secured to a common shaft (15),
- each conveyor track and deflection track (3, 4 and 8, 9 respectively) has a guiding groove (16 and 17 respectively) in which the work-piece carriers (2) are guided by means of guiding pins (18), and
- arranged between the guiding groove (16) of the conveyor track (3, 4) and the guiding groove of the deflection track (8, 9) there is a switch point (19), the position of which controls the transportation of the work-piece carriers (2) into the deflection track (8, 9),
- with it being possible for the work-piece carriers (2) to be channelled out of the conveyor tracks (3, 4) and into one of the other conveyor tracks (3, 4).

2. Segment according to claim 1, characterised in that bar-code readers for identifying work-piece carriers (2) that are provided with bar codes are arranged in the course of the linear conveyor tracks (3, 4).

3. Segment according to claim 2, characterised in that the switch point (19) is actuated by an actuator (20) which reacts to a bar-code read signal.

4. Segment according to one of the preceding claims, characterised in that two shafts (15) bearing the belt pulleys (13, 14) are provided per conveyor track (3, 4).

5. Segment according to claim 4, characterised in that one of the four shafts (15) is driven by a drive element (21) and the remaining shafts (15) are driven by way of the conveyor belts (7, 10) of the conveyor tracks (3, 4) and the deflection tracks (8, 9).

6. Segment according to one of the preceding claims, characterised in that the conveyor belt (10) of the deflection tracks (8, 9) is realized as a loop and in the region of the deflection track (8, 9) is set upon rollers (24) that have a corresponding round channelled recess (25) on the outer circumference.

## Revendications

1. Segment (1) d'un dispositif de transport pour porte-pièces (2) dans une installation de fabrication, comprenant au moins deux voies de transport (3, 4) rectilignes, parallèles et permettant le transport dans des directions opposées, et une voie de déviation (8) située entre les deux voies de transport (3, 4) et une courroie de transport (7) qui change de direction, par lequel dispositif les porte-pièces (2) peuvent être transportés de la voie de transport (3) sur la voie de transport (4), caractérisé en ce que
- les voies de transport (3, 4) agissent conjointement avec des voies de transport (3, 4) réalisées sur d'autres segments, par l'intermédiaire des courroies de transport (7, 10) qui changent de direction, au moins deux voies de déviation (8, 9) étant réalisées aux extrémités (5, 6) des segments entre les voies de transport (3, 4),
- les voies de déviation (8, 9) comportent des extrémités (11, 12) qui chevauchent parallèlement les voies de transport (3, 4) et dont les courroies de transport (7, 10) sont entraînées ou déviées par des poulies (13, 14) qui sont fixées sur un arbre (15) commun,
- chaque voie de transport ou voie de déviation (3, 4 ou 8, 9) est munie d'une rainure de guidage (16 ou 17), dans laquelle sont guidés les porte-pièces (2) au moyen de tétons de guidage (18), et
- entre la rainure de guidage (16) de la voie de transport (3, 4) et la rainure de guidage de la voie de déviation (8, 9) est montée une aiguille (19), dont la position commande le transport des porte-pièces (2) dans la voie de déviation (8, 9),
- les porte-pièces (2) pouvant sortir des voies de transport (3, 4) et pouvant entrer dans une des autres voies de transport (3, 4).

2. Segment selon la revendication 1, caractérisé en ce que des lecteurs de code à barres sont disposés sur le trajet des voies de transport (3, 4) rectilignes et sont destinés à identifier les porte-pièces (2) munis de code à barres.

3. Segment selon la revendication 2, caractérisé en ce que l'aiguille (19) est actionnée par un actionneur (20) qui réagit au signal émis par le lecteur de code à barres.

4. Segment selon l'une quelconque des revendications précédentes, caractérisé en ce qu'il est prévu pour chaque voie de transport (3, 4) deux arbres (15) portant les poulies (13, 14).

5. Segment selon la revendication 4, caractérisé en ce que l'un des quatre arbres (15) est actionné par un élément d'entraînement (21) et les autres arbres (15) sont entraînés par les courroies de transport (7, 10) des voies de transport (3, 4) et des voies de déviation (8, 9).

6. Segment selon l'une quelconque des revendications précédentes, caractérisé en ce que la courroie de transport (10) des voies de déviation (8, 9) est réalisée en forme de câble rond qui, dans la zone de la voie de déviation (8, 9) est monté sur des rouleaux (24) dont la périphérie extérieure comporte une gorge ronde (25) correspondante.
